(19) Europäisches Patentamt / European Patent Office / Office européen des brevets

(11) **EP 3 257 690 B1**

(12) **EUROPEAN PATENT SPECIFICATION**

(45) Date of publication and mention
of the grant of the patent:
**15.01.2025 Bulletin 2025/03**

(21) Application number: **16749034.1**

(22) Date of filing: **27.01.2016**

(51) International Patent Classification (IPC):
**B60G 7/00** *(2006.01)*   **B21D 22/26** *(2006.01)*
**B21D 53/88** *(2006.01)*   **B23K 9/00** *(2006.01)*
**B23K 9/02** *(2006.01)*   **B23K 9/235** *(2006.01)*
**B23K 33/00** *(2006.01)*   **B62D 21/00** *(2006.01)*
**B62D 21/02** *(2006.01)*   **B21C 37/08** *(2006.01)*
**B23K 101/00** *(2006.01)*

(52) Cooperative Patent Classification (CPC):
**B23K 9/02; B21D 22/26; B21D 53/88; B23K 9/00;
B23K 9/0026; B23K 9/235; B23K 33/00;
B23K 33/008; B60G 7/00; B60G 7/001;
B62D 21/00; B62D 21/02;** B23K 2101/006;
B60G 2206/122; B60G 2206/722;      (Cont.)

(86) International application number:
**PCT/JP2016/052321**

(87) International publication number:
**WO 2016/129389 (18.08.2016 Gazette 2016/33)**

(54) **STRUCTURE FOR BONDING PRESS-MOLDED ARTICLE, STRUCTURAL ARTICLE FOR AUTOMOBILE HAVING SAID BONDING STRUCTURE, AND METHOD FOR MANUFACTURING BONDED ARTICLE**

STRUKTUR ZUM VERBINDEN VON PRESSGEFORMTEN ARTIKELN, STRUKTURARTIKEL FÜR EIN KRAFTFAHRZEUG MIT DIESER VERBINDUNGSSTRUKTUR UND VERFAHREN ZUR HERSTELLUNG EINES VERBUNDENEN ARTIKELS

STRUCTURE DE LIAISON D'ARTICLE MOULÉ À LA PRESSE, ARTICLE STRUCTUREL POUR AUTOMOBILE AYANT LADITE STRUCTURE DE LIAISON ET PROCÉDÉ DE FABRICATION D'ARTICLE LIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.02.2015 JP 2015025531**

(43) Date of publication of application:
**20.12.2017 Bulletin 2017/51**

(73) Proprietor: **JFE Steel Corporation
Tokyo 100-0011 (JP)**

(72) Inventors:
• **TOKITA, Yuichi
Tokyo 100-0011 (JP)**

• **SHIOZAKI, Tsuyoshi
Tokyo 100-0011 (JP)**
• **TAMAI, Yoshikiyo
Tokyo 100-0011 (JP)**

(74) Representative: **Hoffmann Eitle
Patent- und Rechtsanwälte PartmbB
Arabellastraße 30
81925 München (DE)**

(56) References cited:
**WO-A1-02/060614      DE-C- 417 167
GB-A- 2 403 172       JP-A- 2001 047 231
JP-A- H 079 135       JP-A- H10 113 717
JP-A- S 635 873       JP-A- S62 296 969
JP-A- S62 296 969     JP-U- S5 896 869
JP-U- S57 139 475     US-A- 5 645 364**

(52) Cooperative Patent Classification (CPC): (Cont.)
B60G 2206/8201

## Description

Field

The present invention relates to a welding structure of a press-formed part that is formed by joining two press-formed parts that each have an opening portion on at least one side of a cross-section, using welding, a structural part for an automotive body including the welding structure, and a method for manufacturing a welding part.

Background

When a structural part is to be manufactured by linearly joining two parts using welding, it is important to make the structural part a high-strength welding structure excellent in fatigue resistance. For example, parts such as a suspension arm, a suspension frame, and a chassis frame that require a high strength among the structural parts for an automobile, have a closed cross-section by joining two parts each having an opening on at least one side of the cross-section, to obtain higher strength characteristics (see Japanese Laid-open Patent Publication No. 2013-82341).

Summary

Technical Problem

Damage on structural parts that are joined by welding is often caused by fatigue. Thus, it is extremely important to prevent damage due to fatigue in designing parts. In general, a fatigue crack tends to occur from the boundary portion between a welding base material and a weld metal. From the prior studies on fatigue strength of welded joints, it is pointed out that the main cause of reduction in fatigue strength in a welded portion is due to stress concentration caused by the shape of an excess weld metal, and not factors such as residual stress and metallographic structure (see Journal of the Japan Welding Society, Japan Welding Society, 1993, Vol. 62, No. 8, p. 595).

In addition, when two parts are fillet welded by arc welding, a crack tends to start from a weld toe of a welded portion in the durability test. Consequently, various methods have been developed to improve the fatigue strength of the welded portion. Such methods include multiple layering using lap fillet welding (see Japanese Laid-open Patent Publication No. 2014-4607), devising shield gas components (see Japanese Laid-open Patent Publication No. 2012-213803), and removing residual stress around the welded portion (see Japanese Laid-open Patent Publication No. H10-193164).

Moreover, WO 02/060614 A1 forms the basis for the preamble of claim 1 and describes a method for manufacturing an elongated box girder assembled with a solid joint from at least two separate prefabricated structural components. The method comprises taking at least one structural component having at least one border area and taking at least one second structural component, the plate having a second or a third thickness. The border area is shaped by shifting the edge of the first plate laterally in a direction perpendicular to the plate surface over a distance equalling the thickness of the second plate to form a support surface parallel with the surface of the finished structural profile at the joint of the structural components. Said structural components are joined with said border area overlapping with the second structural component to be joined at the joint of the structural components, the overall outer surface of the structural profiles being substantially planar at the joint between the structural components.

Additionally, GB 2 403 172 A describes a method of forming a metal box section comprising: providing a first wall part and a second wall part, the first wall part having an offset part at an edge thereof; locating the second wall part adjacent to the first wall part such that the offset part is disposed alongside the second wall part; and forming a weld to join the first wall part and the second wall part. The method is preferably used to join two elements. Each element may have a first wall part with an offset part and a second wall part, or alternatively one element may have two offset parts, while the other element has no offset parts. The method is preferably used in the manufacture of a boom for a material handling vehicle. However, under the present circumstances, there is no suitable method for improving the fatigue strength, because the number of steps and costs are increased in the steps described above.

The present invention has been made to solve the problems, and an object of the present invention is to provide a welding structure of a press-formed part that is made by combining and linearly joining (lap fillet welding) two parts formed by press-forming and each having an opening on at least one side of a cross-section by arc welding, and that is capable of improving fatigue strength without increasing the number of steps and costs, a structural part for an automotive body including the welding structure, and a method for manufacturing a welding part.

Further relevant prior art may be found in JP S63 5873, DE 417 167 C, US 5 645 364 A, JP S63 5873, DE 417 167 C and US 5 645 364 A.

Solution to Problem

To solve the above-described problem and achieve the object, a welding structure of a press-formed part according to claim 1 is defined.

To solve the above-described problem and achieve the object, a structural part for an automotive body according to claim 2 is defined.

To solve the above-described problem and achieve the object, a method for manufacturing a welding part according to claim 3 is defined.

Advantageous Effects of Invention

In a welding structure according to the present invention, to form a closed cross-sectional shape by combining and joining two parts that are formed by press-forming and that each have an opening portion on at least one side of a section, while the opening portions face each other, a step portion is provided by forming a bent projection projecting outwardly on a tip end portion of a side wall portion of one part; a tip end side of the step portion is fitted into the opening portion of the other part; and the step portion of the one part and a tip end of a side wall portion of the other part are linearly joined by arc welding. Consequently, in the welding structure according to the present invention, a portion that is formed by a terminal portion of a weld metal and a part is shaped so as to prevent a stress concentration factor. Thus, it is possible to prevent damage starting from a welded portion, and to improve the fatigue strength of a welding part.

Brief Description of Drawings

FIG. 1 is a cross-sectional view of a welding structure of a press-formed part according to the present invention.
FIG. 2 is a perspective view of an example of suspension parts of an automobile including the welding structure of the press-formed part according to the present invention.
FIG. 3 is a cross-sectional view for explaining the welding structure of the present invention and a conventional welding structure.
FIG. 4 is a diagram for explaining the meaning of symbols in a calculation formula for a stress concentration factor $K_t$.
FIG. 5 is a diagram for explaining a welding structure of a press-formed part according to a First Embodiment.
FIG. 6 is a diagram for explaining a method for manufacturing a welding part according to a Second Embodiment (1).
FIG. 7 is a diagram for explaining a method for manufacturing the welding part according to the Second Embodiment (2).
FIG. 8 is a diagram for explaining a method for forming a test piece in first example.
FIG. 9 is a diagram for explaining the shape of a plane bending-fatigue-test piece in the first example.
FIG. 10 is a diagram for explaining a method of a fatigue test in the first example.
FIG. 11 is a diagram for explaining a suspension arm according to a second example.
FIG. 12 is sectional views of a welding part according to the second example.
FIG. 13 is a diagram for explaining a method of a fatigue test in the second example.

Description of Embodiments

First Embodiment

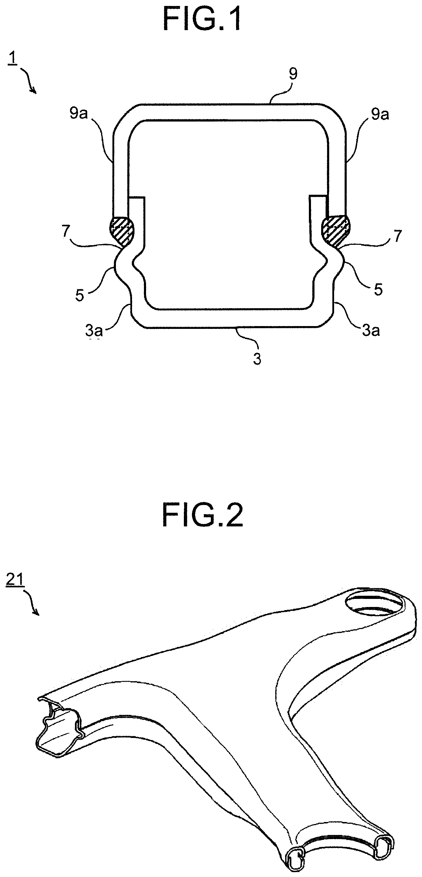

A welding structure 1 of a press-formed part according to a First Embodiment of the present invention (hereinafter, simply referred to as a "welding structure 1") is made by combining and joining two parts that are formed by press-forming and that each have an opening portion on at least one side of a cross-section, while the opening portions face each other, as illustrated in an example in FIG. 1.

As illustrated in FIG. 1, the welding structure 1 includes a step portion 7 that is provided by forming a bent projection 5 projecting outwardly, on the tip end portion of a side wall portion 3a in one part (lower side part 3). In the welding structure 1, the tip end side of the step portion 7 is fitted into the opening portion of another part (upper side part 9), and the tip end portion of a side wall portion 9a of the upper side part 9 and the step portion 7 of the lower side part 3 are linearly joined by arc welding.

For example, the welding part including the welding structure 1 is a suspension arm 21 as illustrated in FIG. 2. The suspension arm 21 is a suspension part that extends from a automotive body like an arm, and that controls the movement of a wheel. For example, the load that acts on the automotive body in the longitudinal direction when the automobile is braked to a stop, is the maximum load acting on the suspension arm 21.

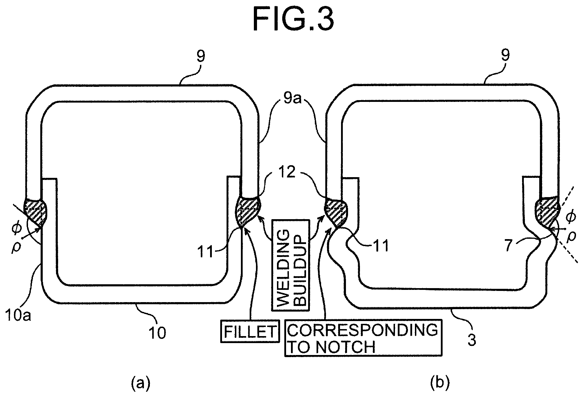

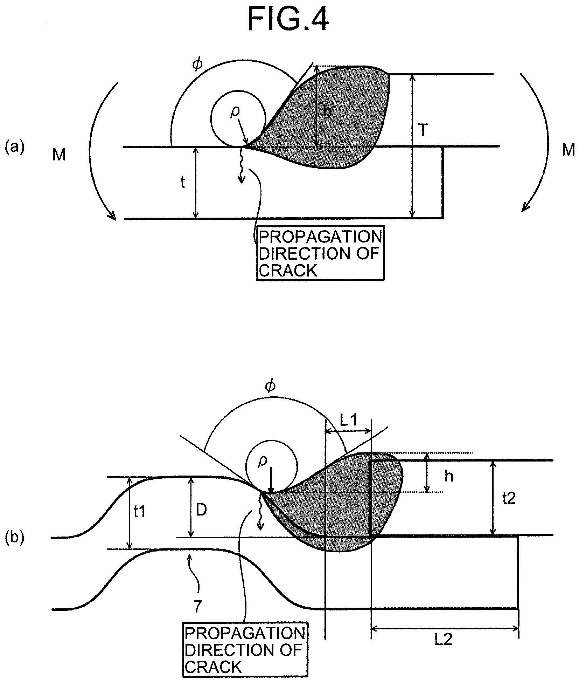

The reason why the fatigue strength is improved by arc welding while providing the step portion 7 as illustrated in FIG. 1 will now be described with reference to FIG. 3 and FIG. 4.

As illustrated in FIG. 3(a), in a conventional lap fillet welding, as indicated by dotted lines in FIG. 3(a), the cross-sectional shape of a portion where the metal plates are overlapped with each other, has a right-angle shape that is formed by the metal plate surface of a lower side part 10 and an edge of the metal plate in the plate thickness direction of the upper side part 9. A location to be welded is the center (corner portion) of the right-angle portion, and a welding buildup is formed on an intersection with the surface portion of the metal plate of the lower side part 3, and an intersection with the surface portion of the metal plate of the upper side part 9, which are a weld toe 11 and a weld toe 12, respectively. In this example, the distance between the weld toe 11 and the weld toe 12 is inevitably the length of the plate thickness of the upper side part 9 or more. In the shape such as the above, the thickness differs in the plate width direction, and it may be regarded as a member to be connected by a fillet. Consequently, a stress concentration factor when stress is concentrated on the fillet needs to be taken into consideration.

On the other hand, in the present invention in which welding is performed by forming the step portion 7, as illustrated in FIG. 3(b), the weld toe 11 of the lower side part 3 side is inevitably a welding buildup relative to the inclined flat plate. The shape such as the above may be regarded as a member including a notch in the plate width direction, and the stress concentration factor when the stress is concentrated on the notch needs to be taken into consideration.

In the conventional lap fillet welding, the calculation formula for a stress concentration factor $K_t$ is the following formula (1). In the welding to provide the step portion 7, the calculation formula for the stress concentration factor $K_t$ is the following formula (2). The meaning of symbols in each formula is as described in the explanatory notes after the formula and in FIG. 4.

First Formula

$$K_t = 1 + \left[\frac{1 - \exp\left\{-0.9\sqrt{\frac{T}{h}}\cdot(\pi-\phi)\right\}}{1 - \exp\left\{-0.9\sqrt{\frac{T}{h}}\cdot\left(\frac{\pi}{2}\right)\right\}}\right] \cdot \left[\tanh\left\{\frac{\left(\frac{T}{t}-1\right)^{\frac{1}{4}}}{1-\frac{\rho}{2t}}\right\}\right] \cdot \left[\frac{0.13 + 0.65\left(1-\frac{\rho}{2t}\right)^4}{\left(\frac{\rho}{2t}\right)^{\frac{1}{3}}}\right] \qquad \cdots (1)$$

It is to be noted that $\phi$ is the excess metal angle, $\rho$ is the radius of curvature, T is the thickness of an overlapped portion, t is the thickness of a lower plate, and h is the bead height.

Second Formula

$$K_t = 1 + \left[\frac{1 - \exp\left\{-0.9\sqrt{\frac{t_1+t_2}{h}}\cdot(\pi-\phi)\right\}}{1 - \exp\left\{-0.9\sqrt{\frac{t_1+t_2}{h}}\cdot\left(\frac{\pi}{2}\right)\right\}}\right] \cdot \left[\frac{\left(\frac{t_2}{t_2-h}-1\right)\cdot(t_2-h)}{\left(4.27\cdot\frac{t_2}{t_1-h}-4\right)\cdot\rho}\right]^{0.23} \qquad \cdots (2)$$

It is to be noted that $\phi$ is the excess metal angle, $\rho$ is the radius of curvature, $t_1$ is the thickness of a plate provided with a step portion, $t_2$ is the thickness of a flat plate, and h is the bead height.

As illustrated in formula (1) and formula (2), the stress concentration factor $K_t$ is reduced when the bead height h illustrated in FIG. 4 is decreased, and the stress concentration is relieved in both formula (1) and formula (2) .

However, when the wettability and the amount of cladding of molten metal for welding metal are the same, the shape of welding buildup affects the shape of the weld metal, after the weld metal is melted and solidified. Consequently, compared with the conventional lap fillet wielding illustrated in FIG. 4(a), in the present invention in which welding is performed by forming the step portion 7 as illustrated in FIG. 4(b), the bead height h is undoubtedly low. Thus, in the present invention, the stress concentration factor $K_t$ is relieved than that of the conventional lap fillet welding. The fatigue strength of the welding structure 1 of the present invention in which welding is performed by forming the step portion 7 is improved more than that of the welding structure that is welded using the conventional lap fillet welding.

In addition, there is a problem in the conventional lap fillet welding in which, welding irregularities tend to occur in the welding direction of arc welding, and fatigue failure tends to occur from the portion where the molten metal for welding is insufficient. Thus, a method capable of uniformly welding in the welding direction has been desired. It is to be noted that the arc welding is performed while placing a welded part such that the surface of the welded part is substantially parallel with the ground.

In the conventional lap fillet welding, as illustrated in FIG. 3(a), the location to be welded is the center (corner portion) of a right-angle portion where an end surface of the tip end portion of the upper side part 9 and the surface of a side wall portion 10a of the lower side part 10 intersect with each other. Thus, the weld toe 11 and the weld toe 12 are the intersection between the welding buildup and the metal plate surface of the lower side part 10, and the intersection between the welding buildup and the metal plate surface of the upper side part 9, respectively. Consequently, the molten metal flows easily on the metal plate surface of the lower side part 10 due to the action of gravity, and when there is a slight variation in the welding conditions or in the surface state of the metal plate, the wettability of the molten metal for welding metal is changed, and welding irregularities tend to occur.

By contrast, in the present invention, as illustrated in FIG. 3(b), the step portion 7 is formed in the lower side part 3. Thus, one weld toe 11 is on the inclination surface of the step portion 7, and the other weld toe 12 is at the tip end of the outer surface of the side wall portion 9a of the upper side part 9. Consequently, a groove shape is formed by the lower side part 3 and the upper side part 9. Because the arc welding is performed along the groove shape, even if the welding conditions and the surface state of the metal plate vary to some extent, the molten metal for welding flows so as to accumulate in the grove, due to the action of gravity. Thus, even if irregularities occur in the molten metal in the welding direction, an action for equalizing the irregularities occurs in the molten metal itself, by the interfacial tension of the molten metal and the action of gravity. Consequently, the present invention is capable of stable welding in which welding irregularities seldom occur, and as a result, it is possible to improve the fatigue strength of the welded portion.

In addition, when the welded portion is subject to repeated stress in a direction parallel to the surface of the plate, the fatigue failure tends to occur from the welding toe, and a crack propagates substantially in the plate thickness direction. Herein the weld toe 12 of one of the weld toes is placed at the same position as the intersection between the welding buildup and the metal plate surface of the upper side part 9, in the conventional lap fillet welding (see FIG. 4(a)) as well as in the present invention in which welding is performed by forming the step portion 7 (see FIG. 4(b)). In the conventional lap fillet welding, the other weld toe 11 becomes the surface of the lower side part 3 (see FIG. 4(a)). Consequently, in the conventional lap fillet welding, the propagation direction of the crack is substantially perpendicular to the surface of the lower side part 3. Thus, the propagation direction of the crack is substantially perpendicular to a direction toward which repeated stress of fatigue is applied (direction parallel to the surface of the lower side part 3). As a result, the propagation length of the crack is reduced.

By contrast, in the present invention in which welding is performed by forming the step portion 7, the surface of the lower side part 3 is inclined (see FIG. 4(b)), and the crack propagates substantially in parallel with the plate thickness direction of the upper side part 9. Consequently, in the present invention, because the crack propagates in an oblique direction relative to the plate thickness direction in the step portion 7, the propagation length becomes longer than that of the conventional lap fillet welding. As a result, in the welding structure 1 of the present invention, the fatigue life is improved more than that of the conventional lap fillet welding.

In addition, in the welding structure 1 according to the present invention, the stiffness of parts will be improved compared with that of the conventional lap fillet welding. More specifically, when the step portion 7 is formed in the lower side part 3, while the shape of the upper side part 9 is the same as that of the conventional example, the cross-section of the lower side part 3 is inevitably increased. When the same moment is applied, the maximum generated stress on the cross-section at the same position is reduced, when the cross-section modulus is increased. The cross-section modulus is a value determined by the shape of the cross-section, and if the plates have the same plate thickness, the plate with a larger cross-section has a larger cross-section modulus. Thus, the cross-section modulus is increased in the welding structure 1 according to the present invention, and because the maximum generated stress is reduced, the stiffness is improved.

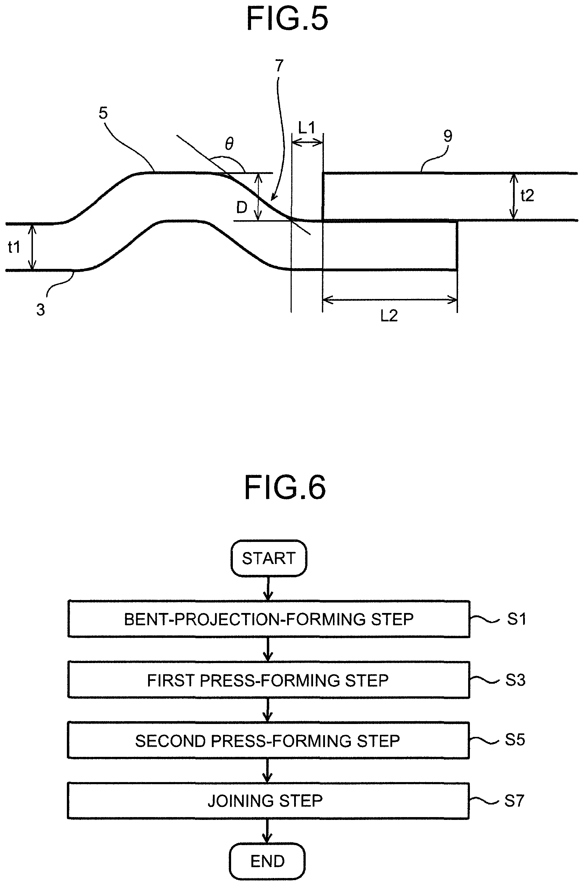

Next, a shape of the step portion 7 will be described with reference to FIG. 5. FIG. 5 is an enlarged diagram of a location where the upper side part 9 and the lower side part 3 are fitted with each other in FIG. 1. In FIG. 5, the plate thickness of the lower side part 3 is $t_1$, the plate thickness of the upper side part 9 is $t_2$, the height of the step portion 7 (height of bent projection) is D, the distance between the tip end of the upper side part 9 and the lower end of the inclination surface of the step portion 7 is 11, the fitting length of the lower side part 3 to the upper side part 9 is $L_2$, and the inclination angle of the step portion 7 is $\theta$.

First, a relation between the height D of the step portion 7 and the plate thickness $t_2$ of the upper side part 9 is $0.5*t_2 \leq D \leq 2*t_2$. In the present invention, the height D of the step portion 7 does not need to be equal to the plate thickness $t_2$ ($D = t_2$) of the counterpart side part (upper side part 9), and a certain effect can be obtained even when the height D of the step portion 7 is half or twice of the plate thickness $t_2$ of the counterpart side part (upper side part 9). Thus, the relation between the height D of the step portion 7 and the plate thickness $t_2$ of the upper side part 9 is $0.5*t_2 \leq D \leq 2*t_2$. This is because when the height of the step portion 7 is set to a fixed amount or more, the shape of the weld metal is relieved without fail compared with that of the lap fillet welding.

Furthermore, it is not preferable to set the height of the step portion 7 to exceed $2*t_2$, because it will be difficult to form the upper side part 9, and assemble the upper side part 9 and the lower side part 3.

The distance $L_1$ between the tip end of the counterpart side part (upper side part 9) and the lower end of the inclination surface of the step portion 7 is equal to or less than the plate thickness $t_2$ of the counterpart side part (upper side part 9). This is because when the distance $L_1$ is larger than the plate thickness $t_2$, the weld toe 11 of the step portion 7 side comes into contact with the surface of the lower side part 3, instead of the inclination surface of the step portion 7. Consequently, the effect due to the difference in shapes compared in FIG. 3(a) and FIG. 3(b) becomes smaller. In this way, the distance L1 is preferably smaller as long as it is within such a range that the tip end of the upper side part 9 does not come into contact with the inclination surface of the step portion 7. In addition, the inclination angle θ formed by the inclination surface of the step portion 7 and the joining surface of the counterpart side part (upper side part 9) is $90° \leq θ \leq 150°$.

The portion where the metal plates of the upper side part 9 and the lower side part 3 are overlapped with each other is increased, as the fitting length L2 of the lower side part 3 to the upper side part 9 is increased. This increases the stiffness of the part itself in addition to the portion, and the stress generated while the same moment is applied will be reduced. Consequently, the fitting length L2 is preferably longer to improve the fatigue strength.

Although the above explanation represents an example of providing the step portion 7 by forming the bent projection 5 on the entire side wall portion 3a in the longitudinal direction (direction perpendicular to the paper surface) in the lower side part 3, it is also possible to provide the step-shaped portion of the present invention partially on the side wall portion 3a in the longitudinal direction.

In addition, in the welding structure 1 according to the present invention, the step portion 7 is provided by forming the bent projection 5 on both right and left side wall portions 3a of the one part (lower side part 3). However, the step portion 7 may be provided by forming the bent projection 5 on either the right or left side wall portion 3a, and joining with the side wall portion of the other part.

Furthermore, the above explanation represented an example of joining the lower side part 3 and the upper side part 9 by fitting the tip end of the lower side part 3 into the upper side part 9, while forming the step portion 7 on the lower side part 3. Conversely, the lower side part 3 and the upper side part 9 may be joined by fitting the tip end of the upper side part 9 into the lower side part 3, while forming the step portion 7 on the upper side part 9.

Second Embodiment

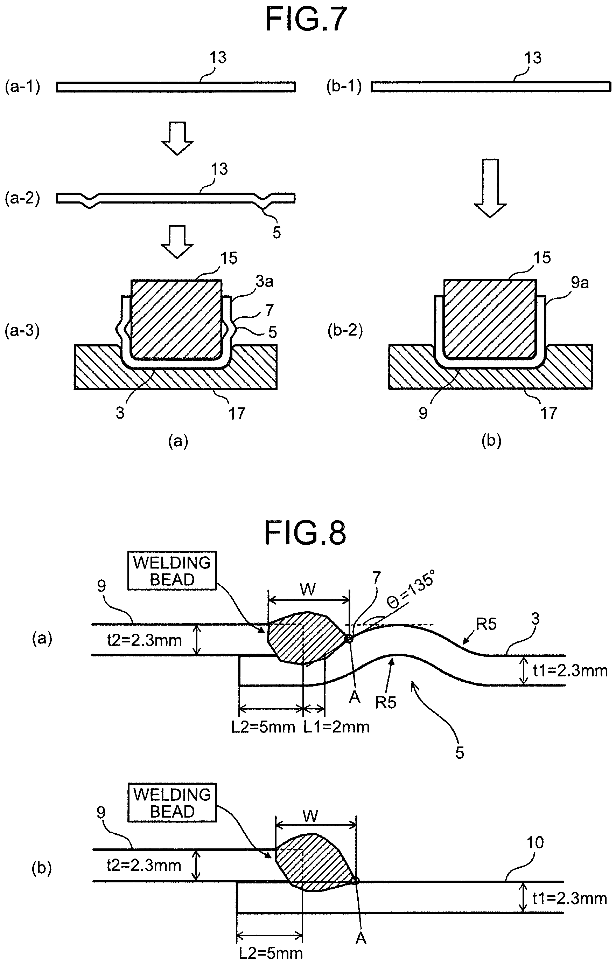

A method for manufacturing a welding part according to a Second Embodiment of the present invention manufactures a welding part that includes the welding structure 1 mainly illustrated in FIG. 1, and that is made by combining and joining two parts each having an opening portion on at least one side, while the opening portions face each other. As illustrated in FIG. 6, the method for manufacturing the welding part according to the Second Embodiment includes a bent-projection-forming step (S1), a first press-forming step (S3), a second press-forming step (S5), and a joining step (S7). Hereinafter, the steps will be specifically described with reference to FIG. 7.

Bent Projection Forming Step

The bent-projection-forming step S1 is a step of forming the bent projection 5 on a location corresponding to the tip end portion of the side wall portion 3a on a blank sheet 13 in one part, among the welding parts (see FIG. 7(a-1) and FIG. 7(a-2)).

In relation with the plate thickness t2 of the counterpart side part (upper side part 9), the height D of the bent projection 5 is $0.5*t2 \leq D \leq 2*t2$. In addition, the inclination angle θ formed by the inclination surface of the step portion 7 that is formed by the bent projection 5 and the joining surface of the counterpart side part (upper side part 9) is $90° \leq θ \leq 150°$.

First Press-Forming Step

The first press-forming step S3 is a step of press-forming the blank sheet 13 on which the bent projection 5 has been formed in the bent-projection-forming step S1, using a punch 15 and a die 17, and obtaining the lower side part 3 having the side wall portion 3a. (see FIG. 7(a-3)).

The tip end portion of the side wall portion 3a that has been formed in this step includes the bent projection 5 projecting outwardly that has been formed in the bent-projection-forming step S1. In addition, because the side wall portion 3a has been formed, the lower side part 3 made in this step has a U-shaped cross section having an opening portion on at least one side of the cross-section of the lower side part 3. Because the bent projection 5 has been formed in the bent-projection-forming step S1 before the side wall portion 3a is formed in this step, the side wall portion 3a having the bent projection 5 can be easily formed on the tip end portion.

Second Press-Forming Step

The second press-forming step S5 is a step of press-forming the blank sheet 13 using the punch 15 and the die 17, and obtaining the upper side part 9 including the side wall portion 9a (see FIG. 7(b-1) and FIG. 7(b-2)). Because the side wall portion 9a is formed, the upper side part 9 that has been made in this step has a U-shaped cross-section having an opening portion on at least one side.

Joining Step

The joining step S7 is a step of fitting the tip end side of the step portion 7 of the lower side part 3 that has been obtained in the first press-forming step S3 to the side wall portion 9a of the upper side part 9 that has been made in the second press-forming step S5, and linearly joining the lower side part 3 and the upper side part 9 by arc welding.

When the upper side part 9 and the lower side part 3 are fitted and joined, the distance L1 between the tip end of the plate of the upper side part 9 and the lower end of the inclination surface of the step portion 7 is the plate thickness t2 of the upper side part 9 or less. The distance L1 is preferably shorter as long as it is within such a range that the tip end of the upper side part 9 does not come into contact with the inclination surface of the step portion 7.

The portion where the metal plates of the upper side part 9 and the lower side part 3 are overlapped with each other is increased, as the fitting length L2 of the lower side part 3 to the upper side part 9 is increased. This increases the stiffness of the part itself in addition to the portion, and the stress generated while the same moment is applied will be reduced. Consequently, the fitting length L2 is preferably longer for improvement of the fatigue strength.

The present Second Embodiment has the following effects. For example, similar to the welding part that is manufactured in the present Second Embodiment, a suspension arm for an automobile is made by combining and joining two parts that are formed by press-forming and that each have an opening portion on at least one side of the cross-section, while the opening portions face each other. However, the two parts are not press-formed in a single step, and a drawing step and a without step are performed on the blank sheet that is to be supplied to the press-forming, as the steps performed prior to press-forming the side wall portions of the two parts.

By forming the bent projection by integrating the bent-projection-forming step according to the present invention into the drawing step and the without step such as the above, it is possible to manufacture the welding part that is economically favorable and that has high fatigue strength, without increasing the number of steps, without requiring a special press-forming device, or without damaging the productivity.

First Example

Experiments were carried out to confirm the effects of the present invention. Hereinafter, the contents of the experiments will be described. Evaluation of durability performance of the parts to be used for the automotive body includes evaluation on the full vehicle by assembling the parts in the actual automotive body, evaluation per part, evaluation by running a basic fatigues test on a sheet (test piece) of a smaller unit, and the like. In the present first example, the performance of the welding structure was evaluated by running the basic fatigue test using a test piece that was made by the welding to provide the step portion according to the present invention (see FIG. 8(a)), and by the lap fillet welding of the conventional technology (see FIG. 8(b)).

Sample

A hot-rolled steel sheet of 980 MPa class having the plate thickness t2 of 2.3 mm was used as a sample.

Method for Forming Test Piece

A steel sheet of 250 mm × 175 mm in size was cut out from the sample. In FIG. 8(a), a welding cross-section of a test piece that was welded by forming the step portion 7 is illustrated as an example of the present invention. In the example of the present invention, the bent projection 5 was formed in the vicinity of the end portion of the cutout steel sheet on one 250-mm length side, by bending and forming using a bender. In this step, the height (depth) D of the step portion 7 that is provided by forming the bent projection 5 is 2.3 mm being equivalent to the plate thickness t2 of the sample. In addition, the inclination angle θ of the step portion 7 that is formed by the bent projection 5 is 135°, and the distance L1 between the tip end of the upper side part 9 and the lower end of the inclination surface of the step portion 7 is 2 mm.

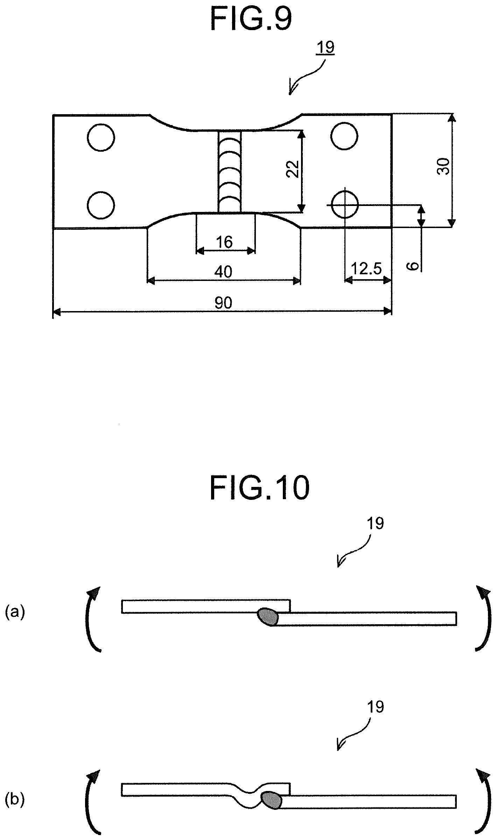

Next, the test piece including the welding structure of the present invention was made by overlapping the end portion of the steel sheet as being cut out, on the end portion side of the steel sheet to which the bent projection 5 was formed, and performing metal active gas (MAG) arc welding on the end surface of the steel sheet side as being cut out. Then, a strip having a width of 30 mm was cut out from the test piece, and a plane bending-fatigue-test piece 19 was made from the strip. As illustrated in FIG. 9, the height of the plane bending-fatigue-test piece 19 was 90 mm, the width was 30 mm, and the width of the center portion was 22 mm.

In FIG. 8(b), a welding cross-section of a test piece that was made by the lap fillet welding of the convention technology is illustrated as a comparative example. In the comparative example, the steel sheets as being cut out from the sample were overlapped with each other, and formed using the MAG arc welding. A strip having a width of 30 mm was cut out from the welded steel sheets, and the plane bending-fatigue-test piece 19 having the shape illustrated in FIG. 9 was made from the strip.

In the example of the present invention as well as in the comparative example, an overlapping margin (fitting length) L2 of the steel sheets was 5 mm. A weld bead width W was 5.5 mm or 7 mm so as to be the same in the example of the present invention and the comparative example.

In the example of the present invention as well as in the comparative example, the arc welding conditions include welding current of 185 A or 205 A, voltage of 19 V or 23 V, welding speed of 85 cm/min, and shield gas of Ar-20%$CO_2$, and a welding wire for high tensile strength steel of 780 MPa class having a diameter of 1.2 mm was used. The arc welding conditions are illustrated in Table 1.

Table 1

| No | Arc welding conditions | | | | | Fatigue test | | Note |
|---|---|---|---|---|---|---|---|---|
| | Current (A) | Voltage (V) | Speed (cm/min) | Welding wire | Welding bead width (mm) | Target stress (MPa) | Repeated times | |
| 1 | 205 | 23 | 85 | 780-MPa class high tensile strength steel ($\phi$1.2) | 7 | 600 | 69400 | Comparative example |
| 2 | | | | | | 500 | 136500 | Comparative example |
| 3 | | | | | | 400 | 613300 | Comparative example |
| 4 | 205 | 23 | 85 | 780-MPa class high tensile strength steel ($\phi$1.2) | 7 | 600 | 149900 | Example of present invention |
| 5 | | | | | | 500 | 565700 | Example of present invention |
| 6 | | | | | | 450 | 1400000 | Example of present invention |
| 7 | | | | | | 400 | 10000000 (unbroken) | Example of present invention |
| 8 | 185 | 19 | 85 | 780-MPa class high tensile strength steel ($\phi$1.2) | 5.5 | 500 | 130600 | Comparative example |
| 9 | | | | | | 400 | 330300 | Comparative example |
| 10 | | | | | | 300 | 10000000 (unbroken) | Comparative example |
| 11 | 185 | 19 | 85 | 780-MPa class high tensile strength steel ($\phi$1.2) | 5.5 | 600 | 188300 | Example of present invention |
| 12 | | | | | | 500 | 826200 | Example of present invention |
| 13 | | | | | | 400 | 10000000 (unbroken) | Example of present invention |

Method of Fatigue Test

The fatigue test was performed using pulsating plane bending (see FIG. 10). PBF-30 manufactured by Tokyo Koki was used as a testing machine, and the testing machine was installed so that the welding bead of the plane bending-fatigue-test piece 19 is facing downward. In this state, the plane bending-fatigue-test piece 19 was installed so that the upper plate was fixed to the driving arm side of the testing machine, and the lower plate was fixed to the measuring swing arm side of the testing machine. Consequently, the center portion of the lower plate in the plate thickness direction becomes a bending neutral surface. The test was performed by repeatedly applying load on the plane bending-fatigue-test piece 19 via the driving arm so that the target stress is applied, until a crack was generated on the plane bending-fatigue-test piece 19. The stress applied to the plane bending-fatigue-test piece 19 was obtained by the moment that was measured via the measuring arm, and the plate thickness and the plate width (average value of the upper plate and the lower plate) of the plane bending-fatigue-test piece 19. The fatigue test conditions include the stress ratio of 0 (pulsating) and the test frequency of 20 Hz. The fatigue test was terminated after 10,000,000 times at maximum.

Results of Fatigue Test

The results of the fatigue test are illustrated in Table 3, which will be described later. The example of the present invention is the welding to provide the step portion 7, and the comparative example is the conventional lap fillet welding. As illustrated in Table 3, regardless of the welding conditions, the fatigue life in the example of the present invention significantly exceeded that in the comparative example.

Second Example

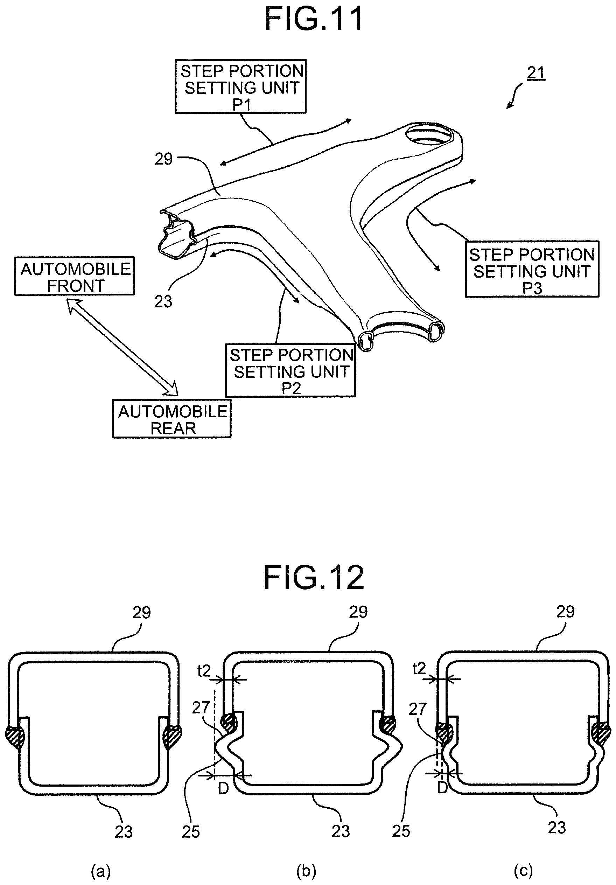

In general, a suspension arm for an automotive body requires strength, and often has a closed cross-sectional shape by fitting two parts that are produced by press-forming and that each have an opening portion to each other. In the second example, the suspension arm 21 illustrated in FIG. 11 is manufactured. The present invention and the conventional technology were compared by running a fatigue test on the suspension arm 21 that was made by performing the lap fillet welding of the convention technology or by performing the welding to provide the step portion of the present invention, on the welding portion (step-portion-setting units P1, P2, and P3) of the two parts.

Sample Welding Part

Two parts that configure the suspension arm 21 are parts obtained by press-forming a hot-rolled steel sheet of 980 MPa class having the plate thickness t2 of 2.3 mm, into a U-shaped cross-section. One part 29 has the same shape in the example of the present invention as well as the conventional example. The arc welding conditions include current of 185 A, voltage of 23 V, welding speed of 85 cm/min, and shield gas of Ar-20%$CO_2$, and a welding wire for high tensile strength steel of 780 Mpa class having the diameter of 1.2 mm was used.

In the conventional example, a step portion 27 is not formed on another part 23, and the lap fillet welding was performed on all the welding portions (P1 to P3 in FIG. 11). On the other hand, in the example of the present invention, the step portion 27 was provided by forming the bent projection on the side wall portion of the other part 23, and the other part 23 and the part 29 were fitted and linearly joined by arc welding.

In the example of the present invention, the height D of the step portion 27 that was provided by forming a bent projection 25 on the other part 23 was made twice the plate thickness t2 (D = 2*t2) in FIG. 12(b), and was made half the plate thickness t2 (D = 0.5*t2) in FIG. 12(c). The location where the step portion 27 was provided by forming the bent projection 25 was under two conditions of all the step-portion-setting units P1, P2, and P3 illustrated in FIG. 11, and of only the step-portion-setting unit P3. The height of the step portion and the conditions of the step-portion-setting unit in the example are illustrated in Table 2.

Table 2

|  | Height of step portion D (mm) | Step portion setting unit |
| --- | --- | --- |
| Conventional example | - | - |
| First example | 1.15 | P1, P2, P3 |
| Second example | 4.60 | P3 |
| Third example | 2.30 | P1, P2, P3 |

Method of Fatigue Test

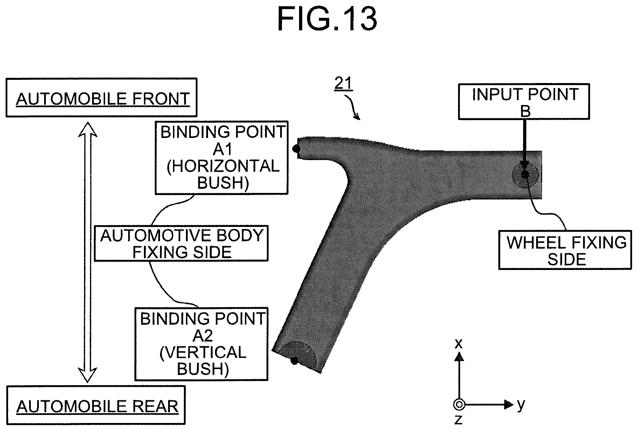

As illustrated in FIG. 13, in the fatigue test, the automotive body fixing side of the suspension arm 21 was restrained (binding points A1 and A2), and the load was applied from the wheel fixing side (input point B). As the binding conditions, at a binding point A1 (horizontal bush), the translational motion (displacement) in an X axis direction (automotive longitudinal direction), a Y axis direction (automotive width direction), and a Z axis direction (automotive vertical direction) was restrained, and only the rotary motion around the axes was allowed. At the binding portion A2 (side bush), the displacement in the Y axis direction and the Z axis direction was restrained, and the displacement in the X axis direction and the rotary motion around the axes were allowed.

As the load conditions, at an input point B, a load of 8000 N at a frequency of 2.5 Hz was repeatedly applied in the X axis direction, the displacement in the Y axis direction and the Z axis direction was restrained, and the displacement in the X axis direction and the rotary motion in all directions were allowed. The fatigue test was conducted to evaluate the number of times the load was repeatedly applied, until a crack was generated on the welding portion of the two parts.

Results of Fatigue Test

The results of the fatigue test are illustrated in Table 3.

Table 3

|  | Repeated number of times until crack is generated |
|---|---|
| Conventional example | 50000 |
| First example | 80000 |
| Second example | 100000 |
| Third example | 120000 |

As illustrated in Table 3, in the example of the present invention in which welding is performed by forming the step portion 27, the repeated number of times until a crack is generated is increased, compared with that of the conventional example. Consequently, the fatigue life was increased when the step portion 27 was formed to join the two parts.

As described above, the fatigue strength of the welded portion was increased when the two parts are joined by forming a step portion on the location where the two parts are to be joined, compared with that of the conventional lap fillet welding. Consequently, the effects of increasing the fatigue life of the welding part have been demonstrated. In addition, by forming the bent projection to provide the step portion, the cross-section modulus of the welding part is increased. Thus, the stiffness is also increased, and the weight reduction of automobile can also be advantageously expected.

Moreover, in the example, the fatigue test was performed on the suspension arm. However, the present invention may be easily applied to manufacturing of a suspension frame and a chassis frame that require high strength, at the welding part that has a closed cross-sectional shape by joining two parts. Consequently, it is possible to improve the fatigue strength and the stiffness.

Industrial Applicability

Because the present invention can improve the fatigue strength of the welding part, the present invention is applicable to a welding structure of a press-formed part, a structural part for an automotive body including the welding structure, and a method for manufacturing a welding part.

Reference Signs List

1 welding structure
3 lower side part
3a side wall portion (lower side part)
5 bent projection
7 step portion
9 upper side part
9a side wall portion (upper side part)

10 lower side part
10a side wall portion (lower side part)
11 weld toe (lower side part side)
12 weld toe (upper side part side)
13 blank sheet
15 punch
17 die
19 plane bending fatigue test piece
21 suspension arm
23 part
25 bent projection
27 step portion
29 part

**Claims**

1. A welding structure (1) of a press-formed part that is made by combining and joining two parts (3, 9) that are formed by press-forming and that each have an opening portion on at least one side of a cross-section, while the opening portions face each other, the welding structure comprises:

   a step portion (7) that has been provided by forming a bent projection (5) on a tip end portion of an outer surface of a side wall portion (3a) of one part (3), partially or entirely on a joining surface, and that
   a tip end side of the step portion (7) is fitted into an inside of the opening portion of another part (9),
   the outer surface that is the step portion (7) of the one part (3) and a tip end of a side wall portion (9a) of the other part (9) have been linearly joined by arc welding, and
   the one part (3) and the other part (9) have been linearly welded so that an excess weld metal comes into contact with an inclination surface of the step portion (7),
   wherein
   when the height of the step portion (7) is D and a plate thickness of the other part (9) is t2, a relation of $0.5*t2 \leq D \leq 2*t2$ is satisfied,
   a distance L1 between the tip end of the side wall portion (9a) of the other part (9) and the lower end of the inclination surface of the step portion (7) is equal to or less than plate thickness (t2) of the other part (9), and
   an inclination angle $\Theta$ formed by the inclination surface of the step portion (7) and the joining surface on the side wall portion (9a) of the other part (9) is $90° \leq \Theta \leq 150°$ **characterized in that** the bent projection (5) is projecting outwardly and that one weld toe (11) is on the inclination surface of the step portion (7) and the other weld toe (12) is at the tip end of the outer surface of the side wall portion (9a) of the other part (9).

2. A structural part for an automotive body including the welding structure of the press-formed part according to claim 1.

3. A method of manufacturing a welding part (1) that is made by combining and joining two parts (3, 9) that are formed by press-forming and that each have an opening portion on at least one side of a cross-section, while the opening portions face each other, the method comprises:

   a bent-projection-forming step (S1) of providing a step portion (7) by forming a bent projection (5) at a location corresponding to a tip end portion of an outer surface of a side wall portion (3a) on a blank sheet in one part (3);
   a first press-forming step (S3) of manufacturing one part (3) having an opening portion by forming the side wall portion (3a) of the blank sheet on which the bent projection (5) is formed such that the bent projection (5) is projecting outwardly;
   a second press-forming step (S5) of manufacturing another part (9) having an opening portion by forming a side wall portion (9a) on a blank sheet; and
   a joining step (S7) of linearly joining the outer surface that is the step portion (7) of the one part (3) and a tip end of the side wall portion (9a) of the other part (9), by fitting a tip end side of the step portion (7) of the one part (3) into a side of the opening portion of the other part (9), by arc welding, wherein the one part (3) and the other part (9) are linearly welded so that an excess weld metal comes into contact with an inclination surface of the step portion (7), wherein one weld toe (11) is on the inclination surface of the step portion (7) and the other weld toe (12) is at the tip end of the outer surface of the side wall portion (9a) of the other part (9), wherein

in relation with a plate thickness (t2) of the other part (9), the height D of the bent projection (5) is 0.5*t2≤D≤2*t2, an inclination angle (Θ) formed by the inclination surface of a step portion (7) that is formed by the bent projection (5) and the joining surface on the side wall portion (9a) of the other part (9) is 90°≤Θ≤150°, and

a distance L1 between the tip end of the side wall portion (9a) of the other part (9) and the lower end of the inclination surface of the step portion (7) is the plate thickness (t2) of the other part (9) or less.

## Patentansprüche

1. Schweißstruktur (1) eines pressgeformten Teils, das durch Kombinieren und Verbinden von zwei Teilen (3, 9), die durch Pressformen gebildet werden und die jeweils einen Öffnungsabschnitt an mindestens einer Seite eines Querschnitts aufweisen, gefertigt wird, wobei die Öffnungsabschnitte einander zugewandt sind, wobei die Schweißkonstruktion Folgendes umfasst:

   einen Stufenabschnitt (7), der durch Bilden eines gebogenen Vorsprungs (5) an einem Spitzenendabschnitt einer äußeren Oberfläche eines Seitenwandabschnitts (3a) eines Teils (3) teilweise oder vollständig auf einer Verbindungsfläche bereitgestellt wurde, und wobei
   eine Spitzenendseite des Stufenabschnitts (7) in eine Innenseite des Öffnungsabschnitts eines anderen Teils (9) eingepasst ist,
   wobei die äußere Oberfläche, die der Stufenabschnitt (7) des einen Teils (3) ist, und ein Spitzenende eines Seitenwandabschnitts (9a) des anderen Teils (9) durch Lichtbogenschweißen linear verbunden wurden, und wobei das eine Teil (3) und das andere Teil (9) linear geschweißt sind, so dass überschüssiges Schweißgut mit einer Neigungsfläche des Stufenabschnitts (7) in Kontakt kommt,
   wobei,
   wenn die Höhe des Stufenabschnitts (7) D ist und eine Plattendicke des anderen Teils (9) t2 ist, eine Beziehung von 0,5*t2≤D≤2*t2 erfüllt ist,
   ein Abstand L1 zwischen dem Spitzenende des Seitenwandabschnitts (9a) des anderen Teils (9) und dem unteren Ende der Neigungsfläche des Stufenabschnitts (7) gleich oder kleiner als die Plattendicke (t2) des anderen Teils (9) ist, und
   ein Neigungswinkel θ, der durch die Neigungsfläche des Stufenabschnitts (7) und die Verbindungsfläche an dem Seitenwandabschnitt (9a) des anderen Teils (9) gebildet wird, 90°≤θ≤150° ist, **dadurch gekennzeichnet, dass** der gebogene Vorsprung (5) nach außen vorsteht und dass sich ein Schweißnahtübergang (11) auf der Neigungsfläche des Stufenabschnitts (7) befindet und der andere Schweißnahtübergang (12) sich am Spitzenende der äußeren Oberfläche des Seitenwandabschnitts (9a) des anderen Teils (9) befindet.

2. Strukturteil für eine Fahrzeugkarosserie, einschließlich der Schweißstruktur des pressgeformten Teils nach Anspruch 1.

3. Verfahren zur Herstellung eines Schweißteils (1), das durch Kombinieren und Verbinden von zwei Teilen (3, 9) gefertigt wird, die durch Pressformen gebildet werden und die jeweils einen Öffnungsabschnitt an mindestens einer Seite eines Querschnitts aufweisen, wobei die Öffnungsabschnitte einander zugewandt sind, wobei das Verfahren Folgendes umfasst:

   einen Schritt zum Formen eines gebogenen Vorsprungs (S1) des Bereitstellens eines Stufenabschnitts (7) durch Bilden eines gebogenen Vorsprungs (5) an einer Stelle, die einem Spitzenendabschnitt einer äußeren Oberfläche eines Seitenwandabschnitts (3a) auf einem unbearbeiteten Blech in einem Teil (3) beträgt;
   einen ersten Pressformschritt (S3) des Herstellens eines Teils (3), das einen Öffnungsabschnitt aufweist, durch Bilden des Seitenwandabschnitts (3a) des unbearbeiteten Blechs, auf dem der gebogene Vorsprung (5) so gebildet wird, dass der gebogene Vorsprung (5) nach außen vorsteht;
   einen zweiten Pressformschritt (S5) des Herstellens eines anderen Teils (9), das einen Öffnungsabschnitt aufweist, durch Bilden eines Seitenwandabschnitts (9a) auf einem unbearbeiteten Blech; und
   einen Verbindungsschritt (S7) des linearen Verbindens der äußeren Oberfläche, die der Stufenabschnitt (7) des einen Teils (3) ist, und eines Spitzenendes des Seitenwandabschnitts (9a) des anderen Teils (9), durch Einpassen einer Spitzenendseite des Stufenabschnitts (7) des einen Teils (3) in eine Seite des Öffnungsabschnitts des anderen Teils (9) durch Lichtbogenschweißen, wobei das eine Teil (3) und das andere Teil (9) linear geschweißt sind, so dass überschüssiges Schweißgut mit einer Neigungsfläche des Stufenabschnitts (7) in Kontakt kommt, wobei ein Schweißnahtübergang (11) sich auf der Neigungsfläche des Stufenabschnitts (7) befindet und der andere Schweißnahtübergang (12) sich am Spitzenende der äußeren Oberfläche des Seitenwandabschnitts (9a) des anderen Teils (9) befindet,

wobei,

in Bezug auf eine Plattendicke (t2) des anderen Teils (9) die Höhe D des gebogenen Vorsprungs (5) $0,5*t2 \leq D \leq 2*t2$ ist,

ein Neigungswinkel ($\theta$), der durch die Neigungsfläche eines Stufenabschnitts (7), der durch den gebogenen Vorsprung (5) gebildet wird, und die Verbindungsfläche an dem Seitenwandabschnitt (9a) des anderen Teils (9) gebildet wird, $90° \leq \theta \leq 150°$ ist, und

ein Abstand L1 zwischen dem Spitzenende des Seitenwandabschnitts (9a) des anderen Teils (9) und dem unteren Ende der Neigungsfläche des Stufenabschnitts (7) der Plattendicke (t2) des anderen Teils (9) oder weniger beträgt.

**Revendications**

1.  Structure de soudage (1) d'une pièce formée à la presse qui est réalisée en combinant et en joignant deux pièces (3, 9) qui sont formées par formage à la presse et qui présentent chacune une partie d'ouverture sur au moins un côté d'une section transversale, tandis que les parties d'ouverture se font face, la structure de soudage comprend :

    une partie étagée (7) qui a été obtenue en formant une saillie courbée (5) sur une partie d'extrémité de pointe d'une surface externe d'une partie de paroi latérale (3a) d'une pièce (3), partiellement ou entièrement sur une surface de jonction, et
    un côté d'extrémité de pointe de la partie étagée (7) est ajusté dans un intérieur de la partie d'ouverture d'une autre pièce (9),
    la surface externe qui est la partie étagée (7) de la une pièce (3) et une extrémité de pointe d'une partie de paroi latérale (9a) de l'autre pièce (9) ont été reliées linéairement par soudage à l'arc, et
    la une pièce (3) et l'autre pièce (9) ont été soudées linéairement de sorte qu'un excès de métal fondu entre en contact avec une surface d'inclinaison de la partie étagée (7),
    dans laquelle
    lorsque la hauteur de la partie étagée (7) est D et que l'épaisseur de plaque de l'autre pièce (9) est t2, une relation $0,5*t2 \leq D \leq 2*t2$ est satisfaite,
    une distance L1 entre l'extrémité de pointe de la partie de paroi latérale (9a) de l'autre pièce (9) et l'extrémité inférieure de la surface d'inclinaison de la partie étagée (7) est égale ou inférieure à l'épaisseur de plaque (t2) de l'autre pièce (9), et
    un angle d'inclinaison $\theta$ formé par la surface d'inclinaison de la partie étagée (7) et la surface de jonction sur la partie de paroi latérale (9a) de l'autre pièce (9) est de $90° \leq \theta \leq 150°$ **caractérisée en ce que** la saillie courbée (5) fait saillie vers l'extérieur et **en ce qu'**un pied de cordon de soudure (11) est situé sur la surface d'inclinaison de la partie étagée (7) et l'autre pied de cordon de soudure (12) est situé au niveau de l'extrémité de pointe de la surface externe de la partie de paroi latérale (9a) de l'autre pièce (9).

2.  Pièce structurelle pour une carrosserie automobile incluant la structure de soudage de la pièce formée à la presse selon la revendication 1.

3.  Procédé de
    fabrication d'une pièce de soudure (1) qui est réalisée en combinant et en joignant deux pièces (3, 9) qui sont formées par formage à la presse et qui présentent chacune une partie d'ouverture sur au moins un côté d'une section transversale, tandis que les parties d'ouverture se font face, le procédé comprend :

    une étape de formation de saillie courbée (S1) consistant à fournir une partie étagée (7) en formant une saillie courbée (5) à un emplacement correspondant à une partie d'extrémité de pointe d'une surface externe d'une partie de paroi latérale (3a) sur un flan dans une pièce (3) ;
    une première étape de formage à la presse (S3) consistant à fabriquer une pièce (3) présentant une partie d'ouverture en formant la partie de paroi latérale (3a) du flan sur laquelle la saillie courbée (5) est formée de telle sorte que la saillie courbée (5) fait saillie vers l'extérieur ;
    une seconde étape de formage à la presse (S5) consistant à fabriquer une autre pièce (9) présentant une partie d'ouverture en formant une partie de paroi latérale (9a) sur un flan ; et
    une étape de jonction (S7) consistant à joindre linéairement la surface externe qui est la partie étagée (7) de la une pièce (3) et une extrémité de pointe de la partie de paroi latérale (9a) de l'autre pièce (9), en ajustant un côté d'extrémité de pointe de la partie étagée (7) de la une pièce (3) dans un côté de la partie d'ouverture de l'autre pièce (9), par soudage à l'arc, dans lequel la une pièce (3) et l'autre pièce (9) sont soudées linéairement de sorte qu'un excès de métal fondu entre en contact avec une surface d'inclinaison de la partie étagée (7), dans lequel un pied de cordon de soudure (11) est situé sur la surface d'inclinaison de la partie étagée (7) et l'autre pied de cordon de soudure (12) est situé au niveau de l'extrémité de pointe de la surface externe de la partie de paroi latérale (9a) de l'autre pièce (9),

dans lequel

en relation avec une épaisseur de plaque (t2) de l'autre pièce (9), la hauteur D de la saillie courbée (5) est de $0,5*t2 \leq D \leq 2*t2$,

un angle d'inclinaison ($\theta$) formé par la surface d'inclinaison d'une partie étagée (7) qui est formée par la saillie courbée (5) et la surface de jonction sur la partie de paroi latérale (9a) de l'autre pièce (9) est de $90° \leq \theta \leq 150°$, et une distance L1 entre l'extrémité de pointe de la partie de paroi latérale (9a) de l'autre pièce (9) et l'extrémité inférieure de la surface d'inclinaison de la partie étagée (7) est l'épaisseur de plaque (t2) de l'autre pièce (9) ou moins.

# FIG.1

# FIG.2

# FIG.3

(a)          (b)

# FIG.4

(a) M

φ

ρ

h

T

t

PROPAGATION
DIRECTION OF
CRACK

M

(b)

φ

L1

ρ

h

t2

t1

D

7

PROPAGATION
DIRECTION OF
CRACK

L2

# FIG.5

# FIG.6

START

BENT-PROJECTION-FORMING STEP ～ S1

FIRST PRESS-FORMING STEP ～ S3

SECOND PRESS-FORMING STEP ～ S5

JOINING STEP ～ S7

END

# FIG.7

(a-1)

13

(b-1)

13

(a-2)

13

5

(a-3)

15

3a

7

5

3

17

(b-2)

15

9a

9

17

(a)

(b)

# FIG.8

(a)

9

WELDING BEAD

W

7

Θ=135°

t2=2.3mm

R5

3

A

R5

t1=2.3mm

L2=5mm  L1=2mm

5

(b)

9

WELDING BEAD

W

10

t2=2.3mm

t1=2.3mm

A

L2=5mm

# FIG.9

# FIG.10

# FIG.11

STEP PORTION
SETTING UNIT
P1

21

29

STEP PORTION
SETTING UNIT
P3

AUTOMOBILE
FRONT

23

STEP PORTION
SETTING UNIT
P2

AUTOMOBILE
REAR

# FIG.12

29

29

29

$t2$

27

$D$

23

25

23

$t2$

27

$D$

25

23

(a)

(b)

(c)

# FIG.13

AUTOMOBILE FRONT

BINDING POINT
A1
(HORIZONTAL
BUSH)

21

INPUT POINT
B

AUTOMOTIVE BODY
FIXING SIDE

WHEEL FIXING
SIDE

BINDING POINT
A2
(VERTICAL
BUSH)

AUTOMOBILE REAR

x

z  ●→y

23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013082341 A
- JP 2014004607 A
- JP 2012213803 A
- JP H10193164 A
- WO 02060614 A1
- GB 2403172 A
- JP S635873 A
- DE 417167 C
- US 5645364 A

**Non-patent literature cited in the description**

- *Journal of the Japan Welding Society, Japan Welding Society*, 1993, vol. 62 (8), 595